# EUROPÄISCHE PATENTSCHRIFT

(11) **EP 4 107 716 B1**
(45) Veröffentlichungstag und Bekanntmachung des Hinweises auf die Patenterteilung: **31.01.2024**
(21) Anmeldenummer: 20842557.9
(22) Anmeldetag: 15.12.2020
(51) Int. Cl.: G08G 1/16, B60Q 1/32, B60Q 9/00, B60R 21/0134

(54) **VERFAHREN ZUM UNTERSTÜTZEN EINES INSASSEN BEI EINEM AUSSTEIGEN AUS EINEM FAHRZEUG UNTER BERÜCKSICHTIGUNG VON FOLGEOBJEKTEN, RECHENEINRICHTUNG SOWIE FAHRERASSISTENZSYSTEM**
METHOD FOR ASSISTING AN OCCUPANT IN EXITING A VEHICLE, TAKING INTO ACCOUNT FOLLOWING OBJECTS, COMPUTING DEVICE, AND DRIVER ASSISTANCE SYSTEM
PROCÉDÉ AIDANT UN OCCUPANT À SORTIR D'UN VÉHICULE, PRENANT EN COMPTE LES OBJETS SUIVANTS, DISPOSITIF INFORMATIQUE, ET SYSTÈME D'AIDE À LA CONDUITE

(30) Priorität: 20.02.2020 DE 102020104535
(43) Veröffentlichungstag der Anmeldung: 28.12.2022
(73) Patentinhaber: Bayerische Motoren Werke Aktiengesellschaft, 80809 München (DE)
(72) Erfinder: SIEKIERKA, Tomasz, 81241 München (DE); TSCHOEPE, Werner, 81477 München (DE)
(86) Internationale Anmeldenummer: PCT/EP2020/086079
(87) Internationale Veröffentlichungsnummer: WO 2021/164920

(56) Entgegenhaltungen:
- EP-A1- 3 594 035
- DE-A1-102005 014 581
- DE-A1-102005 021 142
- DE-A1-102011 079 003
- DE-A1-102011 115 740
- DE-A1-102014 010 654
- DE-A1-102018 114 331

## Beschreibung

Die vorliegende Erfindung betrifft ein Verfahren zum Unterstützen eines Insassen bei einem Aussteigen aus einem Fahrzeug. Des Weiteren betrifft die vorliegende Erfindung eine Recheneinrichtung für ein Fahrerassistenzsystem eines Fahrzeugs sowie ein derartiges Fahrerassistenzsystem. Außerdem betrifft die vorliegende Erfindung ein Computerprogramm.

Aus dem Stand der Technik sind unterschiedliche Fahrerassistenzsysteme bekannt, welche einen Insassen bzw. Fahrer im Betrieb des Fahrzeugs unterstützen. Vorliegend gilt das Interesse insbesondere solchen Fahrerassistenzsystemen, welche einen Insassen beim Aussteigen aus dem Fahrzeug unterstützen. Derartige Fahrerassistenzsysteme, welche auch als Ausstiegswarner bezeichnet werden, umfassen üblicherweise einen Sensor, mit dem ein Öffnen einer Tür des Fahrzeugs durch den Insassen erkannt werden kann. Des Weiteren weisen diese Fahrerassistenzsysteme zumindest einen Umfeldsensor auf, mit welchem Objekte bzw. andere Verkehrsteilnehmer in der Umgebung des Fahrzeugs erfasst werden können. In Abhängigkeit von den erfassten Objekten kann dann der Insasse gewarnt werden, damit eine Kollision zwischen der geöffneten Tür und einem Objekt verhindert wird.

In diesem Zusammenhang beschreibt die EP 1 375 267 A2 ein Verfahren zum Erkennen einer Unfallgefahr, bei dem mittels Abstandssensoren eines Fahrzeugs Objekte in Erfassungsbereichen vor und/oder hinter dem Fahrzeug erfasst werden. Des Weiteren werden aus den Abstandssignalen während einer Fahrt des Fahrzeugs Abstände der Objekte vor und/oder hinter dem Fahrzeug ermittelt und bei stehendem Fahrzeug wird eine Kollisionsgefahr des Objektes mit einer sich öffnenden Fahrzeugtür des Fahrzeugs ermittelt. Weiterhin beschreibt DE 10 2011 115 740 A1 einen Türöffnungsassistent für ein Kraftfahrzeug, der mittels einer Umfeldsensorik den seitlichen Bereich des Fahrzeugs überwacht und mittels einer Vorrichtung zur Erkennung einer Öffnung einer Fahrzeugtür eine Öffnung einer Fahrzeugtür erkannt. Mit diesen Informationen analysiert der Assistent, ob eine Gefahr der Kollision der Fahrzeugtür mit anderen Verkehrsobjekten droht, was eine Warnung oder Verhinderung des Öffnens der Fahrzeugtür auslöst.

Bei bekannten Fahrerassistenzsystemen zur Ausstiegswarnung kann zudem eine Kollisionszeit zwischen dem Öffnen der Tür und einer möglichen Kollision eines Objekts mit der Tür bestimmt werden. In Abhängigkeit von dieser Kollisionszeit kann dann entweder einer Warnung oder eine Akutwarnung ausgebenden werden. Wenn sich aber im dichten Verkehr beispielsweise fortlaufend Objekte bzw. andere Verkehrsteilnehmer an dem Fahrzeug vorbeibewegen, kann sich der Fall ergeben, dass die Akutwarnung dauerhaft ausgegeben wird. Dies kann den Insassen stören aber auch verunsichern.

Es ist Aufgabe der vorliegenden Erfindung, eine Lösung aufzuzeigen, wie ein Verfahren zum Unterstützen eines Insassen beim Aussteigen aus einem Fahrzeug der eingangs genannten Art auf zuverlässige Weise an die aktuelle Verkehrssituation angepasst werden kann.

Diese Aufgabe wird erfindungsgemäß durch ein Verfahren, durch eine Recheneinrichtung, durch ein Fahrerassistenzsystem sowie durch ein Computerprogramm mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren dient zum Unterstützen eines Insassen bei einem Aussteigen aus einem Fahrzeug. Das Verfahren umfasst das Empfangen von Öffnungsdaten, welche ein bevorstehendes Öffnen einer Tür des Fahrzeugs durch den Insassen beschreiben. Darüber hinaus umfasst das Verfahren das Empfangen von Objektdaten, welche Positionen und Geschwindigkeiten von Objekten in einer Umgebung des Fahrzeugs beschreiben. Außerdem umfasst das Verfahren das Bestimmen einer Kollisionszeit zwischen dem Öffnen der Tür und einer möglichen Kollision eines ersten Objekts mit der Tür anhand der Öffnungsdaten und der Objektdaten und das Ausgeben eines Akutwarnsignals, falls eine die Kollisionszeit eine vorbestimmte Mindestdauer unterschreitet. Ferner umfasst das Verfahren das Überprüfen anhand der Objektdaten, ob dem ersten Objekt ein weiteres Objekt folgt, das Klassifizieren des weiteren Objekts als Folgeobjekt, falls eine Zeitlücke zwischen dem ersten Objekt und dem weiteren Objekt einen vorbestimmten Grenzwert unterschreitet, und das Ausgeben eines Warnsignals nach der Ausgabe des Akutwarnsignals, falls das weitere Objekt als Folgeobjekt klassifiziert wird.

Mithilfe des Verfahrens soll ein Insasse des Fahrzeugs beim Aussteigen aus dem Fahrzeug unterstützt werden. Das Verfahren kann insbesondere durchgeführt werden, nachdem das Fahrzeug abgestellt bzw. geparkt wurde. Dabei kann sich der Insasse auf einem Fahrersitz, einem Beifahrersitz oder auf einem Rücksitz des Fahrzeugs befinden. Grundsätzlich kann das Verfahren für das Aussteigen aller Insassen aus dem Fahrzeug genutzt werden. Das Verfahren kann mittels einer Recheneinrichtung eines Fahrerassistenzsystems des Fahrzeugs durchgeführt werden. Diese Recheneinrichtung, welche beispielsweise durch ein elektronisches Steuergerät des Fahrzeugs gebildet sein kann, kann die Öffnungsdaten empfangen. Die Öffnungsdaten können mit zumindest einem Sensor des Fahrzeugs erfasst werden. Mit dem Sensor kann beispielsweise das Öffnen eines Türkontakts der Tür und/oder eine Berührung eines Hebels zum Öffnen der Tür erfasst werden. Alternativ oder zusätzlich kann es sich bei dem Sensor um eine Kamera handeln, mittels welcher die Bewegungen des Insassen erfasst werden können. Die Öffnungsdaten können mit der Recheneinrichtung entsprechend ausgewertet werden und dabei erkannt werden, dass der Insasse die Tür öffnet oder öffnen möchte. Ferner kann anhand der Öffnungsdaten ein (voraussichtlicher) Zeitpunkt für das Öffnen der Tür bestimmt werden.

Darüber hinaus werden mit der Recheneinrichtung die Objektdaten empfangen, welche Objekte in der Umgebung des Fahrzeugs beschreiben. Insbesondere beschreiben die Objektdaten die Positionen und die Geschwindigkeiten der Objekte. Die Objektdaten können mit einem Umfeldsensor oder mehreren Umfeldsensoren des Fahrzeugs bereitgestellt werden. Bei dem Umfeldsensor kann es sich um einen Abstandssensor handeln, mit dem fortlaufend der Abstand zwischen dem Fahrzeug und dem Objekt bestimmt werden kann. Hieraus kann dann die Geschwindigkeit des Objekts abgeleitet werden. Bevorzugt kann mit dem Umfeldsensor neben dem Abstand bzw. der Position auch die Geschwindigkeit des Objekts gemessen werden. Der Umfeldsensor kann insbesondere als Radarsensor ausgebildet sein. Anhand der Objektdaten kann dann mittels der Recheneinrichtung überprüft werden, ob sich Objekte in der Umgebung des Fahrzeugs befinden. Bei den Objekten kann es sich um weitere Verkehrsteilnehmer, beispielsweise Fahrzeuge oder Fahrradfahrer, handeln.

Mittels der Recheneinrichtung kann auch überprüft werden, ob eine Kollision mit den erfassten Objekten und der sich öffnenden Tür droht. Hierzu kann überprüft werden, ob sich das Objekt in einem Gefahrenbereich oder einen Schwenkbereich der Tür bewegen wird. Des Weiteren kann mit der Recheneinrichtung die Kollisionszeit (TTC - Time To Collision) bestimmt werden. Die Kollisionszeit beschreibt die Zeitdauer zwischen dem Öffnen der Tür und einer möglichen Kollision zwischen dem Objekt und der geöffneten Tür. Falls die Kollisionszeit die vorbestimmte Mindestzeitdauer überschreitet, kann mittels der Recheneinrichtung ein Warnsignal ausgegeben werden. Infolge des ausgesendeten Warnsignals kann mittels einer Warneinrichtung des Fahrerassistenzsystems eine Warnung an den Insassen ausgegeben werden. Diese Warnung kann insbesondere rein optisch erfolgen, wobei beispielsweise ein Leuchtelement an einem Außenspiegel des Fahrzeugs aktiviert wird. Falls aber die Kollisionszeit die vorbestimmte Mindestdauer unterschreitet, kann von der Recheneinrichtung das Akutwarnsignal ausgesendet werden. Bei dem Aussenden des Akufiniarnsignals kann mittels der Warneinrichtung dann die Akutwarnung ausgegeben werden, wobei sich die Akutwarnung von der Warnung unterscheidet. Dabei kann die Akutwarnung sowohl optisch als auch akustisch erfolgen. Beispielsweise kann bei der Akutwarnung das Leuchtelement an dem Außenspiegel blinken und zusätzlich ein Warnton ausgegeben werden.

Wenn beispielsweise nach dem Abstellen des Fahrzeugs ein Objekt erkannt wird, mit dem eine Kollision droht, kann dies als erstes Objekt klassifiziert werden. In Abhängigkeit von der Kollisionszeit kann dann entweder das Warnsignal oder das Akutwarnsignal ausgegeben werden. Falls das Akutwarnsignal ausgesendet wird bzw. die Akutwarnung ausgegeben wird, wird zudem überprüft, ob ein weiteres Objekt bzw. ein weiterer Verkehrsteilnehmer auf das erste Objekt folgt. Es wird also überprüft, ob sich zumindest ein weiteres Objekt in Fahrtrichtung hinter dem ersten Objekt befindet, welches die gleiche Fahrtrichtung wie das erste Objekt aufweist. Das weitere Objekt kann sich insbesondere auf der Fahrspur des ersten Objekts befinden. Ferner wird die Zeitlücke zwischen dem ersten Objekt und dem weiteren Objekt bestimmt. Die Zeitlücke beschreibt die Zeitspanne, in der zwei aufeinander folgende Fahrzeuge bzw. Objekte einen bestimmten Punkt passieren. Wenn die Zeitlücke den vorbestimmten Grenzwert unterschreitet, wird das weitere Objekt als Folgeobjekt klassifiziert.

Wenn das weitere Objekt als Folgeobjekt klassifiziert wird, wird nach der Ausgabe des Akufiniarnsignals das Warnsignal ausgeben. Dies bedeutet insbesondere, dass nicht durchgehend die Akutwarnung ausgegeben wird, solange das erste Objekt und das Folgeobjekt das Fahrzeug passiert haben. Bevorzugt wird zunächst die Akutwarnung ausgegeben und sobald erkannt wird, dass ein Folgeobjekt auf das erste Objekt folgt, wird anstelle der Akutwarnung nur die Warnung ausgegeben. Dies eignet sich insbesondere bei einem hohen Verkehrsaufkommen, bei welchem eine Vielzahl von dicht aufeinander fahrenden Objekten bzw. Fahrzeugen an dem Fahrzeug vorbeibewegt werden. Erfindungsgemäß wird bei einer Kolonne von Objekten die Akutwarnung nicht dauerhaft für alle vorbeifahrenden Objekte aus der Kolonne ausgegeben. Vorliegend ist unter dem Begriff "Kolonne" eine zusammenhängende Reihe von Objekten bzw. Fahrzeugen im Verkehrsfluss zu verstehen. Bei einer solchen Kolonne wird insbesondere nur bei dem ersten Objekt die Akutwarnung ausgegeben und für die nachfolgenden Objekte bzw. Folgeobjekte wird lediglich die Warnung ausgeben. Somit wird der Insasse in einer derartigen Verkehrssituation nicht durch eine dauerhafte Akutwarnung gestört und/oder verunsichert.

Bevorzugt wird zudem überprüft, ob auf das Folgeobjekt ein weiteres Objekt folgt, wobei das weitere Objekt als Folgeobjekt klassifiziert wird, falls die Zeitlücke zwischen dem Folgeobjekt und einem weiteren Objekt den vorbestimmten Grenzwert unterschreitet. Mit anderen Worten kann also überprüft werden, ob auf das erste Objekt mehrere Folgeobjekte folgen. Dabei werden die Objekte als Folgeobjekte klassifiziert, falls die jeweilige Zeitlücke zwischen den Objekten geringer als der vorbestimmte Grenzwert ist. Die Warnung kann also insbesondere ausgegeben werden, solange die Zeitlücke zwischen zwei unmittelbar aufeinander folgenden Objekten den Grenzwert nicht überschreitet. Somit kann bei einer Kolonne von Objekten bzw. Fahrzeugen das dauerhafte Abspielen der Akutwarnung zuverlässig verhindert werden.

In einer Ausführungsform wird das Warnsignal ausgegeben, solange sich ein Folgeobjekt in einem vorbestimmten Gefahrenbereich in der Umgebung des Fahrzeugs befindet. In der Umgebung des Fahrzeugs kann der Gefahrenbereich definiert werden. Falls sich in diesem Gefahrenbereich ein Objekt befindet, kann eine Kollision zwischen dem Objekte und der sich öffnenden bzw. geöffneten Tür des Fahrzeugs drohen. Dabei kann der Gefahrenbereich in Abhängigkeit davon bestimmt werden, welche Türe oder Türen des Fahrzeugs geöffnet werden. Wie bereits erläutert, können ein oder mehrere Folgeobjekte erkannt werden. Dabei kann das Warnsignal ausgesendet werden bzw. die Warnung ausgegeben werden, solange bis das letzte erkannte Folgeobjekt die Gefahrenzone verlassen hat. Wenn die Warnung nicht mehr ausgegeben wird, ist die Kolonne von Objekten an dem Fahrzeug vorbeigezogen und der Insasse kann sicher aus dem Fahrzeug aussteigen.

In einer weiteren Ausgestaltung wird das Akutwarnsignal ausgegeben, solange sich das erste Objekt in dem vorbestimmten Gefahrenbereich in der Umgebung des Fahrzeugs befindet. Wie bereits erläutert, kann bei einer Kolonne von Objekten, die an dem Fahrzeug vorbeifahren, nur bei dem ersten Objekt die Akutwarnung ausgegeben werden. Hierbei ist insbesondere vorgesehen, dass sie Akutwarnung ausgegeben wird, solange sich das erste Objekt innerhalb des Gefahrenbereichs befindet. Es kann auch vorgesehen sein, dass das Akutwarnsignal zusätzlich noch für eine vorbestimmte Zeitdauer ausgesendet wird, nachdem das erste Objekt die Gefahrenzone verlassen hat. Somit kann der Insassen darauf hingewiesen werden, dass bei dem Öffnen der Tür bzw. dem Aussteigen aus dem Fahrzeug besteht. Er wird aber nicht durch eine dauerhafte Akutwarnung während der Vorbeifahrt der gesamten Kolonne gestört.

Weiterhin ist vorteilhaft, wenn ein Warnsignal ausgeben wird, falls die Kollisionszeit für ein Objekt die vorbestimmte Mindestdauer überschreitet. Wie bereits erläutert, wird die Akutwarnung ausgegeben, falls die Kollisionszeit für ein Objekt die vorbestimmte Mindestdauer unterschreitet. Falls die Kollisionszeit die vorbestimmte Mindestdauer aber überschreitet, wird lediglich die Warnung ausgegeben werden. Es kann auch vorgesehen sein, dass bei der Erfassung eines Objekts mit einer Kollisionszeit unterhalb der Mindestdauer das Warnsignal ausgeben wird, solange bis das Objekt den Gefahrenbereich verlassen hat. Es kann also vorgesehen sein, dass nicht von einer Warnung zu einer Akutwarnung gewechselt wird, auch wenn sich das Objekt auf das Fahrzeug zu bewegt. Wenn bei einem Objekt das Warnsignal ausgegeben wird, wird zudem insbesondere nicht überprüft, ob auf das Objekt weitere Folgeobjekte folgen.

In einer weiteren Ausführungsform unterbleibt die Klassifizierung eines weiteren Objekts als Folgeobjekt, falls das weitere Objekt auf das erste Objekt folgt und die Zeitlücke zwischen dem ersten Objekt und dem weiteren Objekt den vorbestimmten Grenzwert überschreitet, oder falls das weitere Objekt auf ein Folgeobjekt folgt und die Zeitlücke zwischen dem Folgeobjekt und dem weiteren Objekt den vorbestimmten Grenzwert überschreitet. Wenn ein erstes Objekt detektiert wird und die Akutwarnung ausgegeben wird, wird überprüft, ob auf das erste Objekt Folgeobjekte folgen. Hier kann sich der Fall ergeben, dass auf das erste Objekt zwar ein weiteres Objekt folgt, aber die Zeitlücke größer als der Grenzwert ist. In diesem Fall wird das weitere Objekt nicht als Folgeobjekt klassifiziert. In Abhängigkeit von der Kollisionszeit für dieses Objekt kann dann entweder die Akutwarnung oder die Warnung ausgegeben. Es kann auch der Fall sein, dass nach dem ersten Objekt ein oder mehrere Folgeobjekte erkannt wurden, die Zeitlücke zu einem weiteren Objekt, welches auf das zuletzt erkannte Folgeobjekt folgt, aber den Grenzwert überschreitet. Auch in diesem Fall wird dieses weitere Objekt nicht als Folgeobjekt klassifiziert. Somit kann auf einfache und zuverlässige Weise zwischen einer Kolonne von Objekten und einzelnen Objekten, welche nicht Teil der Kolonne sind, unterschieden werden.

In einer weiteren Ausführungsform wird anhand der Objektdaten eine Objektliste zum Identifizieren und/oder Klassifizieren der in der Umgebung erkannten Objekte erstellt. Es kann also eine Objektliste erstellt werden, in welcher die jeweiligen erkannten Objekte gelistet sind. Diesen einzelnen Objekten kann dann eine Kennung bzw. ID zugeordnet werden. Ferner kann den Objekten in der Liste eine Klassifizierung als erstes Objekt oder als Folgeobjekt zugeordnet werden. Es kann auch vorgesehen sein, dass auf Grundlage der Objektdaten eine digitale Umgebungskarte erzeugt wird, welche die Objekte und deren Positionen beschreiben. Auch in der digitalen Umgebungskarte können für Objekte Informationen zur Identifizierung und/oder Klassifizierung hinterlegt sein. Somit können die einzelnen Objekte zuverlässig identifiziert und/oder klassifiziert werden und damit die Warnung gezielt ausgeben werden.

Eine erfindungsgemäße Recheneinrichtung für ein Fahrerassistenzsystem eines Fahrzeugs ist zum Durchführen eines erfindungsgemäßen Verfahrens und der vorteilhaften Ausgestaltungen davon ausgelegt. Die Recheneinrichtung kann insbesondere durch ein elektronisches Steuergerät eines Fahrzeugs gebildet sein.

Ein erfindungsgemäßes Fahrerassistenzsystem für ein Fahrzeug umfasst eine erfindungsgemäße Recheneinrichtung. Darüber hinaus umfasst das Fahrerassistenzsystem zumindest einen Umfeldsensor zum Erfassen von Objekten in der Umgebung des Fahrzeugs. Mit dem zumindest einen Umfeldsensor können die Objektdaten bereitgestellt werden, welche die Objekte in der Umgebung des Fahrzeugs beschreiben. Es kann bevorzugt auch vorgesehen sein, dass das Fahrerassistenzsystem eine Mehrzahl von Umfeldsensoren aufweist. Der zumindest eine Umfeldsensor kann als Radarsensor ausgebildet sein. Darüber hinaus umfasst das Fahrerassistenzsystem zumindest einen Sensor um Erfassen einer bevorstehenden Öffnung einer Tür des Fahrzeugs. Mit dem zumindest einen Sensor kann auch ein Ausstiegswunsch von einem Insassen erfasst werden. Mit dem zumindest einen Sensor kann ein Öffnen eines Türkontakts, eine Berührung und/oder Betätigung eines Hebels zum Öffnen der Tür oder dergleichen erfasst werden. Schließlich umfasst das Fahrerassistenzsystem eine Warneinrichtung zum Ausgeben einer Warnung oder einer Akutwarnung.

Ein erfindungsgemäßes Fahrzeug umfasst ein erfindungsgemäßes Fahrerassistenzsystem. Das Fahrzeug ist insbesondere als Personenkraftwagen ausgebildet.

Ein weiterer Aspekt der Erfindung betrifft ein Computerprogramm, umfassend Befehle, die bei der Ausführung des Programms durch eine Recheneinrichtung diese veranlassen, ein erfindungsgemäßes Verfahren und die vorteilhaften Ausgestaltungen davon auszuführen. Des Weiteren betrifft die Erfindung ein computerlesbares (Speicher)medium, umfassend Befehle, die bei der Ausführung durch eine Recheneinrichtung diese veranlassen, ein erfindungsgemäßes Verfahren und die vorteilhaften Ausgestaltungen davon auszuführen.

Die mit Bezug auf das erfindungsgemäße Verfahren vorgestellten bevorzugten Ausführungsformen und deren Vorteile gelten entsprechend für die erfindungsgemäße Recheneinrichtung, für das erfindungsgemäße Fahrerassistenzsystem, für das erfindungsgemäße Fahrzeug, für das erfindungsgemäße Computerprogramm sowie für das computerlesbare (Speicher)medium.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- Fig. 1: eine schematische Darstellung eines Fahrzeugs, welches ein Fahrerassistenzsystem zum Unterstützen eines Insassen beim Aussteigen aus dem Fahrzeug aufweist;
- Fig. 2: eine Verkehrssituation, bei welcher das Fahrzeug abgestellt ist und sich Objekte in Form von weiteren Fahrzeugen in der Umgebung des Fahrzeugs befinden; und
- Fig. 3: die Verkehrssituation gemäß Fig. 2 zu einem späteren Zeitpunkt.

In den Figuren werden gleiche oder funktionsgleiche Elemente mit den gleichen Bezugszeichen versehen.

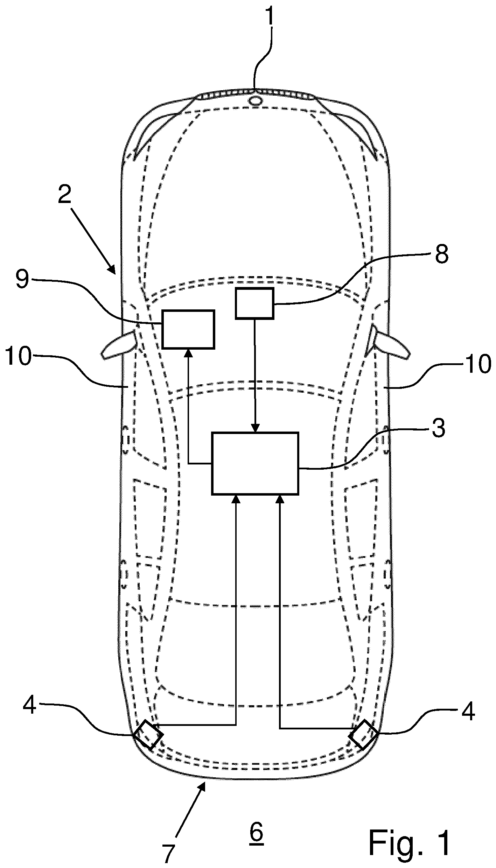

Fig. 1 zeigt in einer schematischen Darstellung ein Fahrzeug 1, welches vorliegend als Personenkraftwagen ausgebildet ist, in einer Draufsicht. Das Fahrzeug 1 umfasst ein Fahrerassistenzsystem 2, welches dazu dient, einen Insassen beim Aussteigen aus dem Fahrzeug 1 zu unterstützen. Das Fahrerassistenzsystem 2 umfasst eine Recheneinrichtung 3, welche beispielsweise durch ein elektronisches Steuergerät des Fahrzeugs 1 gebildet sein kann.

Darüber hinaus umfasst das Fahrerassistenzsystem 2 zumindest einen Umfeldsensor 4, mittels welchem Objekte 5 in einer Umgebung 6 des Fahrzeugs 1 erfasst werden können. In dem vorliegenden Beispiel umfasst das Fahrerassistenzsystem 2 zwei Umfeldsensoren 4, welche in einem Heckbereich 7 des Fahrzeugs 1 angeordnet sind. Mit den Umfeldsensoren 4 kann insbesondere ein Abstand zwischen dem Umfeldsensor 4 und den jeweiligen Objekten 5 sowie eine Geschwindigkeit der jeweiligen Objekte 5 bestimmt werden. Die Umfeldsensoren 4 können insbesondere als Radarsensoren ausgebildet sein. Mit den Umfeldsensoren 4 können Objektdaten bereitgestellt werden, welche die Objekte 5 in der Umgebung 6 beschreiben. Diese Objektdaten können von den Umfeldsensoren 4 an die Recheneinrichtung 3 übertragen werden.

Des Weiteren umfasst das Fahrerassistenzsystem 2 einen vorliegend nur schematisch dargestellten Sensor 8, mittels welchem ein Öffnen einer Tür 10 des Fahrzeugs 1 erfasst werden kann. Es kann auch vorgesehen sein, dass mit dem Sensor 8 ein Öffnungswunsch bzw. ein Bewegen des Insassen in Richtung der Tür 10 erkannt werden kann. Mit dem Sensor 8 können Öffnungsdaten bereitgestellt werden, welche das Öffnen der Tür 10 bzw. das bevorstehende Öffnen der Tür 10 beschreiben. Diese Öffnungsdaten können von dem Sensor 8 an die Recheneinrichtung 3 übertragen werden.

Außerdem umfasst das Fahrerassistenzsystem 2 eine Warneinrichtung 9, mittels welcher unterschiedliche Warnungen an die Insassen ausgegeben werden können. Die Warneinrichtung 9 kann insbesondere mehrere Komponenten aufweisen, mit denen akustische und optische Warnungen ausgegeben werden können. Mit der Warneinrichtung 9 kann eine Warnung an die Insassen ausgegeben werden. Hierzu kann ein Leuchtelement in dem Außenspielgel, welcher der Tür 10 zugeordnet ist, zum Leuchten ansteuert werden. Des Weiteren kann mit der Warneinrichtung 9 eine Akutwarnung ausgegeben werden. Hierbei kann das Leuchtelement in dem Außenspiegel zum Blinken angesteuert werden und zudem kann ein akustisches Signal bzw. ein Warnton in einem Innenraum des Fahrzeugs 1 ausgegeben werden. Wenn mit der Recheneinrichtung 3 ein Warnsignal ausgesendet wird, wird mit der Warneinrichtung die Warnung ausgegeben und wenn mit der Recheneinrichtung 3 ein Akutwarnsignal ausgesendet wird, wird mit der Warneinrichtung 9 die Akutwarnung ausgegeben.

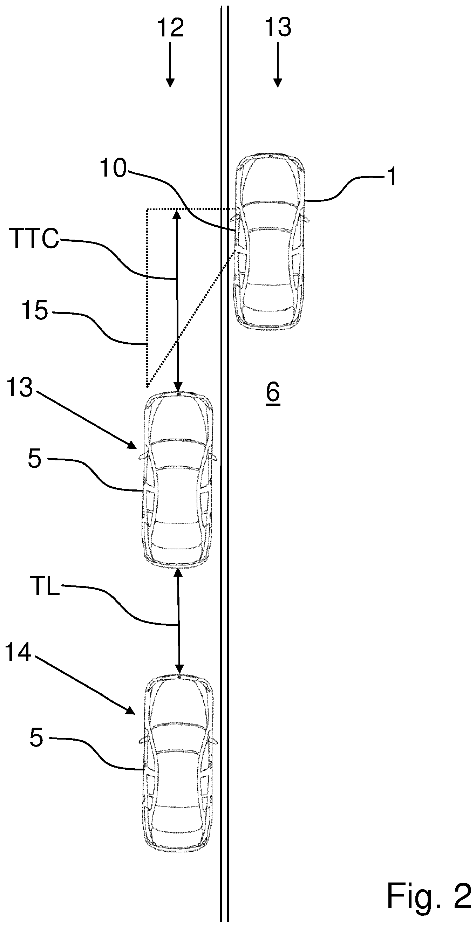

Fig. 2 zeigt in einer schematischen Darstellung eine Verkehrssituation, bei welcher das Fahrzeug 1 auf einem Parkbereich 11 abgestellt ist. Hier möchte der vorliegend nicht dargestellte Insasse, welcher sich auf dem Fahrersitz des Fahrzeugs 1 befindet, die Tür 10 öffnen. Dieses bevorstehende Öffnen der Tür 10 wird mittels der Recheneinrichtung 3 anhand der Öffnungsdaten erkannt. Des Weiteren können mittels der Recheneinrichtung 3 anhand der Objektdaten die Objekte 5 in der Umgebung 6 des Fahrzeugs 1 erkannt werden. Bei dem gezeigten Beispiel befinden sich zwei Objekte 5 in Form von weiteren Fahrzeugen auf einer Fahrspur 12, welche an dem Parkbereich 11 angrenzt. Diese Objekte 5 bewegen sich dabei in Vorwärtsfahrtrichtung.

Anhand der Objektdaten können mittels der Recheneinrichtung 3 fortlaufend die Position und die Geschwindigkeit der jeweiligen Objekte 5 bestimmt werden. Des Weiteren kann mittels der Recheneinrichtung 3 eine Kollisionszeit TTC zwischen dem Öffnen der Tür 10 und einer möglichen Kollision des Objekts 5 mit der Tür 10 bestimmt werden. Diese Kollisionszeit TTC wird zudem mit einer vorbestimmten Mindestdauer, welche beispielsweise 2 s betragen kann, verglichen. Wenn die Kollisionszeit TTC die Mindestdauer überschreitet, wird von der Recheneinrichtung 3 das Warnsignal ausgegeben. In dem vorliegenden Beispiel unterschreitet die Kollisionszeit TTC die Mindestzeitdauer. Daher wird mittels der Recheneinrichtung 3 das Akutwarnsignal ausgesendet.

Wenn mittels der Recheneinrichtung 3 das Akutwarnsignal ausgesendet wird bzw. die Akutwarnung ausgeben wird, wird das Objekt 5, aufgrund dessen die Akutwarnung ausgegeben wird, als erstes Objekt 13 klassifiziert. Des Weiteren wird überprüft, ob diesem ersten Objekt 13 ein weiteres Objekt 5 folgt. In dem gezeigten Beispiel folgt dem ersten Objekt 13 ein weiteres Objekt 5. Anhand der Objektdaten wird mittels der Recheneinrichtung 3 eine Zeitlücke TL zwischen dem ersten Objekt 13 und dem nachfolgenden Objekt 5 bestimmt. Falls die Zeitlücke TL einen Grenzwert, welcher beispielsweise 2 s betragen kann, unterschreitet, wird das weitere Objekt 5 als Folgeobjekt 14 klassifiziert. Bei der vorliegenden Verkehrssituation wird das weitere Objekt 5 bzw. das hintere Fahrzeug als Folgeobjekt 14 klassifiziert. Wenn nach dem ersten Objekt 13 das Folgeobjekt 14 erkannt wird, wird die Akutwarnung ausgeben, solange sich das erste Objekt 13 in einem vorbestimmten Gefahrenbereich 15 befindet. Wenn das erste Objekt 13 den Gefahrenbereich 15 verlassen hat, wird für das Folgeobjekt 14 keine Akutwarnung, sondern nur eine Warnung ausgegeben.

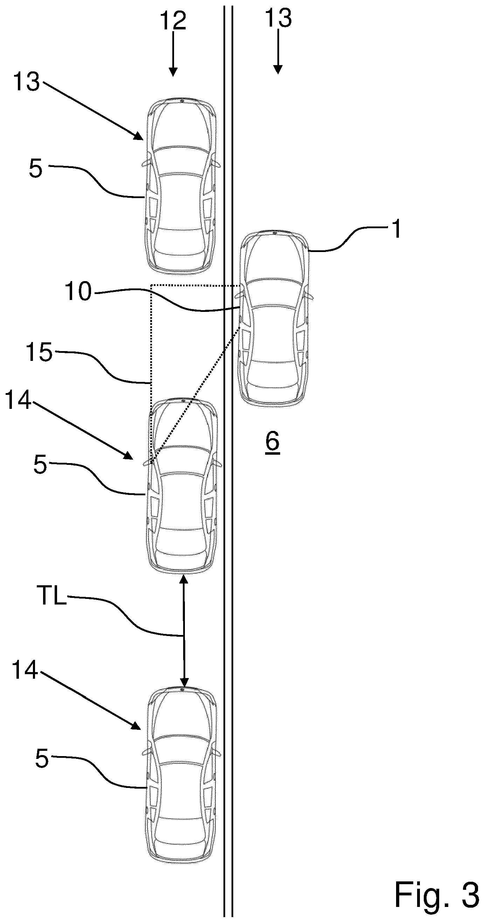

Fig. 3 zeigt die Verkehrssituation gemäß Fig. 2 zu einem späteren Zeitpunkt. Hier hat das erste Objekt 13 bereits den Gefahrenbereich 15 verlassen. In diesem Fall wird aufgrund des Folgeobjekts 14 die Warnung ausgegeben. In Fahrtrichtung hinter dem Folgeobjekt 14 befindet sich ein weiteres Objekt 5. Hier wird anhand der Objektdaten die Zeitlücke zwischen dem Folgeobjekt 14 und dem weiteren Objekt 5 bestimmt. Da in dem Beispiel die Zeitlücke TL zwischen dem Folgeobjekt 14 und dem weiteren Objekt 5 den Grenzwert unterschreitet, wird das weitere Objekt 5 auch als Folgeobjekt 14 klassifiziert. Auch für dieses Folgeobjekt 14 wird die Warnung ausgegeben. Dabei wird die Warnung ausgegeben, solange das letzte erkannte Folgeobjekt 14 den Warnbereich 15 verlassen hat. Bei einer Kolonne, welche das erste Objekt 13 und zumindest ein Folgeobjekt 14 umfasst, wird somit nicht dauerhaft die Akutwarnung ausgegeben. Somit wird der Insasse bei einer Kolonne von Fahrzeugen nicht durch eine lange andauernde Akutwarnung gestört und/oder verunsichert.

## Patentansprüche

1. Verfahren zum Unterstützen eines Insassen bei einem Aussteigen aus einem Fahrzeug (1) mit den Schritten:
- Empfangen von Öffnungsdaten, welche ein bevorstehendes Öffnen einer Tür (10) des Fahrzeugs (1) durch den Insassen beschreiben,
- Empfangen von Objektdaten, welche Positionen und Geschwindigkeiten von Objekten (5, 13, 14) in einer Umgebung (6) des Fahrzeugs (1) beschreiben,
- Bestimmen einer Kollisionszeit (TTC) zwischen dem Öffnen der Tür (10) und einer möglichen Kollision eines ersten Objekts (13) mit der Tür (10) anhand der Öffnungsdaten und der Objektdaten und
- Ausgeben eines Akutwarnsignals, falls eine die Kollisionszeit (TTC) eine vorbestimmte Mindestdauer unterschreitet,
**gekennzeichnet durch**
- Überprüfen anhand der Objektdaten, ob dem ersten Objekt (13) ein weiteres Objekt (5) folgt,
- Klassifizieren des weiteren Objekts (5) als Folgeobjekt (14), falls eine Zeitlücke (TL) zwischen dem ersten Objekt (13) und dem weiteren Objekt (5) einen vorbestimmten Grenzwert unterschreitet, und
- Ausgeben eines Warnsignals nach der Ausgabe des Akutwarnsignals, falls das weitere Objekt (5) als Folgeobjekt (14) klassifiziert wird.

2. Verfahren nach Anspruch 1,
**dadurch gekennzeichnet, dass**
zudem überprüft wird, ob auf das Folgeobjekt (14) ein weiteres Objekt (5) folgt, wobei das weitere Objekt (5) ebenfalls als Folgeobjekt (14) klassifiziert wird, falls die Zeitlücke (TL) zwischen dem Folgeobjekt (14) und einem weiteren Objekt (5) den vorbestimmten Grenzwert unterschreitet.

3. Verfahren nach Anspruch 1 oder 2,
**dadurch gekennzeichnet, dass**
das Warnsignal ausgegeben wird, solange sich ein Folgeobjekt (14) in einem vorbestimmten Gefahrenbereich (15) in der Umgebung (6) des Fahrzeugs (1) befindet.

4. Verfahren nach einem der vorhergehenden Ansprüche,
**dadurch gekennzeichnet, dass**
das Akutwarnsignal ausgegeben wird, solange sich das erste Objekt (13) in dem vorbestimmten Gefahrenbereich (15) in der Umgebung (6) des Fahrzeugs (1) befindet.

5. Verfahren nach einem der vorhergehenden Ansprüche,
**dadurch gekennzeichnet, dass**
eine Klassifizierung des weiteren Objekts (5) als Folgeobjekt (14) unterbleibt, falls das weitere Objekt (5) auf das erste Objekt (13) folgt und die Zeitlücke (TL) zwischen dem ersten Objekt (13) und dem weiteren Objekt (5) den vorbestimmten Grenzwert überschreitet, oder falls das weitere Objekt (5) auf ein Folgeobjekt (14) folgt und die Zeitlücke (TL) zwischen dem Folgeobjekt (14) und dem weiteren Objekt (5) den vorbestimmten Grenzwert überschreitet.

6. Verfahren nach einem der vorhergehenden Ansprüche,
**dadurch gekennzeichnet, dass**
anhand der Objektdaten eine Objektliste zum Identifizieren und/oder Klassifizieren der in der Umgebung erkannten Objekte (5, 13, 14) erstellt wird.

7. Recheneinrichtung (3) für ein Fahrerassistenzsystem (2) eines Fahrzeugs (1), wobei die Recheneinrichtung (3) zum Durchführen eines Verfahrens nach einem der vorhergehenden Ansprüche eingerichtet ist.

8. Fahrerassistenzsystem (2) für ein Fahrzeug (1) umfassend eine Recheneinrichtung (3) nach Anspruch 7, zumindest einen Umfeldsensor (4) zum Erfassen von Objekten (5, 13, 14) in einer Umgebung (6) des Fahrzeugs (1), zumindest einen Sensor (8) zum Erfassen einer bevorstehenden Öffnung einer Tür (10) des Fahrzeugs (1) und eine Warneinrichtung (9) zum Ausgeben einer Warnung oder einer Akutwarnung.

9. Computerprogramm, umfassend Befehle, die bei der Ausführung des Programms durch eine Recheneinrichtung (3) diese veranlassen, ein Verfahren nach einem der Ansprüche 1 bis 6 auszuführen.

## Claims

1. Method for assisting an occupant when exiting a vehicle (1), having the steps of:
- receiving opening data which describe imminent opening of a door (10) of the vehicle (1) by the occupant,
- receiving object data which describe positions and speeds of objects (5, 13, 14) in a surrounding area (6) of the vehicle (1),
- determining a time-to-collision (TTC) between the opening of the door (10) and a possible collision between a first object (13) and the door (10) on the basis of the opening data and the object data, and
- outputting an acute warning signal if the time-to-collision (TTC) falls below a predetermined minimum period,
**characterized by**
- checking, on the basis of the object data, whether a further object (5) follows the first object (13),
- classifying the further object (5) as a following object (14) if a time gap (TL) between the first object (13) and the further object (5) falls below a predetermined limit value, and
- outputting a warning signal, after the acute warning signal has been output, if the further object (5) is classified as a following object (14).

2. Method according to Claim 1,
**characterized in that**
it is additionally checked whether a further object (5) follows the following object (14), wherein the further object (5) is likewise classified as a following object (14) if the time gap (TL) between the following object (14) and a further object (5) falls below the predetermined limit value.

3. Method according to Claim 1 or 2,
**characterized in that**
the warning signal is output as long as a following object (14) is in a predetermined hazardous area (15) in the surrounding area (6) of the vehicle (1).

4. Method according to one of the preceding claims,
**characterized in that**
the acute warning signal is output as long as the first object (13) is in the predetermined hazardous area (15) in the surrounding area (6) of the vehicle (1).

5. Method according to one of the preceding claims,
**characterized in that**
the further object (5) is not classified as a following object (14) if the further object (5) follows the first object (13) and the time gap (TL) between the first object (13) and the further object (5) exceeds the predetermined limit value or if the further object (5) follows a following object (14) and the time gap (TL) between the following object (14) and the further object (5) exceeds the predetermined limit value.

6. Method according to one of the preceding claims, **characterized in that**
an object list for identifying and/or classifying the objects (5, 13, 14) detected in the surrounding area is created on the basis of the object data.

7. Computing device (3) for a driver assistance system (2) of a vehicle (1), wherein the computing device (3) is configured to carry out a method according to one of the preceding claims.

8. Driver assistance system (2) for a vehicle (1), comprising a computing device (3) according to Claim 7, at least one environmental sensor (4) for capturing objects (5, 13, 14) in a surrounding area (6) of the vehicle (1), at least one sensor (8) for capturing imminent opening of a door (10) of the vehicle (1), and a warning device (9) for outputting a warning or an acute warning.

9. Computer program comprising instructions which, when the program is executed by a computing device (3), cause the latter to carry out a method according to one of Claims 1 to 6.

## Revendications

1. Procédé d'assistance apportée à un occupant de véhicule pour sortir d'un véhicule (1), ledit procédé comprenant les étapes suivantes :
- recevoir des données d'ouverture qui décrivent une ouverture imminente d'une porte (10) du véhicule (1) par l'occupant,
- recevoir des données d'objet qui décrivent les positions et vitesses d'objets (5, 13, 14) dans un environnement (6) du véhicule (1),
- déterminer un temps de collision (TTC) entre l'ouverture de la porte (10) et une éventuelle collision d'un premier objet (13) avec la porte (10) sur la base des données d'ouverture et des données d'objet et
- délivrer un signal d'avertissement aigu si le temps de collision (TTC) devient inférieur à une durée minimale prédéterminée,
**caractérisé par** les étapes suivantes
- vérifier sur la base des données d'objet si le premier objet (13) est suivi d'un autre objet (5),
- classer l'autre objet (5) comme objet suivant (14) si un intervalle de temps (TL) entre le premier objet (13) et l'autre objet (5) devient inférieur à une valeur limite prédéterminée, et
- délivrer un signal d'avertissement après la délivrance du signal d'avertissement aigu si l'autre objet (5) est classé comme objet suivant (14).

2. Procédé selon la revendication 1, **caractérisé en ce qu'**une vérification est également effectuée pour savoir si l'objet suivant (14) est suivi d'un autre objet (5), l'autre objet (5) étant également classé comme objet suivant (14) si l'intervalle de temps (TL) entre l'objet suivant (14) et un autre objet (5) devient inférieur à la valeur limite prédéterminée.

3. Procédé selon la revendication 1 ou 2, **caractérisé en ce que** le signal d'avertissement est délivré tant qu'un objet suivant (14) se trouve dans une zone dangereuse prédéterminée (15) dans l'environnement (6) du véhicule (1).

4. Procédé selon l'une des revendications précédentes, **caractérisé en ce que** le signal d'avertissement aigu est délivré tant que le premier objet (13) se trouve dans la zone dangereuse prédéterminée (15) dans l'environnement (6) du véhicule (1) .

5. Procédé selon l'une des revendications précédentes, **caractérisé en ce qu'**un classement de l'autre objet (5) comme objet suivant (14) cesse si l'autre objet (5) suit le premier objet (13) et si l'intervalle de temps (TL) entre le premier objet (13) et l'autre objet (5) devient supérieur à la valeur limite prédéterminée, ou si l'autre objet (5) suit un objet suivant (14) et si l'intervalle de temps (TL) entre l'objet suivant (14) et l'autre objet (5) devient supérieur à la valeur limite prédéterminée.

6. Procédé selon l'une des revendications précédentes, **caractérisé en ce qu'**une liste d'objets est créée sur la base des données d'objet afin d'identifier et/ou de classer les objets (5, 13, 14) détectés dans l'environnement.

7. Dispositif informatique (3) destiné à un système d'assistance au conducteur (2) d'un véhicule (1), le dispositif informatique (3) étant conçu pour mettre en œuvre un procédé selon l'une des revendications précédentes.

8. Système d'assistance au conducteur (2) destiné à un véhicule (1), ledit système comprenant un dispositif informatique (3) selon la revendication 7, au moins un capteur d'environnement (4) destiné à détecter des objets (5, 13, 14) dans un environnement (6) du véhicule (1), au moins un capteur (8) destiné à détecter une ouverture imminente d'une porte (10) du véhicule (1) et un dispositif d'avertissement (9) destiné à délivrer un avertissement ou un avertissement aigu.

9. Programme informatique, comprenant des instructions qui, lorsque le programme est exécuté par un dispositif informatique (3), ordonnent à celui-ci de mettre en ouvre un procédé selon l'une des revendications 1 à 6.
